# DEMANDE DE BREVET EUROPEEN

(11) **EP 0 577 501 A1**
(43) Date de publication de la demande: **05.01.1994**
(21) Numéro de dépôt: 93401677.5
(22) Date de dépôt: 29.06.1993
(51) Int. Cl.: B60R 1/00, B60Q 1/00, G02B 27/00

(54) **Procédé et dispositif de vision de nuit à longue distance pour véhicules automobiles**

(30) Priorité: 30.06.1992 FR 9208017
(71) Demandeur: VALEO VISION, 93012 Bobigny Cédex (FR)
(72) Inventeur: Cibie, Pierre, F-92200 Neuilly Sur Seine (FR)
(74) Mandataire: Lemaire, Marc

(57) **Abrégé**

L'invention concerne un procédé et un dispositif de vision de nuit à longue distance pour véhicules automobiles.

Le dispositif selon l'invention comprend un moyen d'éclairage à grande distance en infrarouge invisible et des capteurs photo-électriques recevant le rayonnement infrarouge réfléchi et est caractérisé en ce qu'il comprend un réseau de cellules photo-émettrices (B) monté en parallèle auxdits capteurs, et un système de projection ( , M) de l'image dudit réseau (B) sur le pare-brise du véhicule (A).

Application à l'industrie automobile.

## Description

L'éclairage et la vision de nuit à longue distance pour les véhicules automobiles est un problème de plus en plus important pour la sécurité et le confort de conduite. En effet, le trafic de nuit important sur les autoroutes et les routes nationales rend l'utilisation des projecteurs longue portée (ou de route) de plus en plus rare puisqu'elle est interdite lors du croisement d'un véhicule roulant en sens inverse et lorsqu'elle risque d'éblouir le conducteur du véhicule précédent. La conduite s'effectue donc avec l'éclairage de croisement (ou de code) qui est très souvent insuffisant, compte tenu des caractéristiques de la route et de ses abords, du degré d'éclairage nocturne et des conditions climatiques pour permettre de conserver la sécurité de la conduite diurne, même en réduisant la vitesse.

Ce problème est aggravé, dans tous les cas, par le phénomène visuel dit du "trou-noir" provoqué lors du passage de l'éclairage de route à l'éclairage de croisement.

Les tentatives faites pour améliorer la vision de nuit au moyen de lunettes filtrantes n'ont amené que des résultats insuffisants.

Il est connu, en particulier pour des applications militaires, d'éclairer l'environnement en rayonnement infrarouge invisible et d'observer le paysage ainsi éclairé au moyen de filtres optiques ou optoélectroniques restituant une image dans la plage du visible.

Ces moyens connus peuvent difficilement être appliqués directement à l'industrie automobile parce que l'image obtenue s'oppose à l'image vue du fait de l'éclairage de croisement qui est obligatoire et nécessaire sur les véhicules routiers.

La présente invention vise en conséquence à fournir un nouveau procédé et un dispositif pour sa mise en oeuvre qui assurent une vision de nuit à grande distance sans gêne pour la vision de près, de sorte que le conducteur soit dans des conditions de conduite très voisines de celles de la conduite de jour.

A cet effet, l'invention a pour objet un procédé de vision de nuit à longue distance pour véhicules automobiles, du type dans lequel on émet depuis le véhicule un faisceau d'éclairage en fréquence infrarouge invisible et on traite l'image ainsi obtenue de l'environnement par des moyens optoélectroniques restituant une image visible de l'image infrarouge, caractérisé en ce que le faisceau de lumière visible de l'éclairage de croisement et le faisceau d'infrarouge sont géométriquement complémentaires, lesdits moyens optoélectroniques comprennent un réseau de capteurs transformant les rayons infrarouges réfléchis incidents en forces électromotrices, on applique lesdites forces électromotrices à un réseau parallèle de cellules photoémettrices qui produisent une image visible éclairée du paysage et on projette ladite image visible, par l'intermédiaire d'un système optique, sur le pare-brise du conducteur en supprimant la fraction de rayonnement infrarouge émis par l'éclairage de croisement et réfléchi sur lesdits capteurs.

Le procédé selon l'invention permet une vision de nuit analogue à celle de jour, avec l'image du paysage lointain projetée sur le pare-brise sans interférence avec l'image du paysage proche éclairé par les projecteurs de croisement et en complément de cette image.

De préférence, on effectue une coupure inférieure de l'image projetée afin d'éviter sa superposition avec le champ éclairé par les projecteurs de croisement.

Avantageusement, dans le cas d'un pare-brise non-plan, on compense par ledit système optique la déformation de l'image formée sur le pare-brise.

Selon une caractéristique importante de l'invention destinée à éviter l'éblouissement des conducteurs équipés du dispositif de l'invention par un véhicule également équipé, on prévoit qu'on module le faisceau infrarouge émis à une fréquence codée, on compare cette fréquence codée à la fréquence des rayonnements reçus par lesdits capteurs et on supprime la transmission auxdites cellules pour des fréquences comparées différentes. Avec un nombre de codes élevé, la probabilité de croiser un véhicule ayant le même code peut être rendue très faible.

Dans tous les cas, l'image éventuellement produite sur le pare-brise par le faisceau d'éclairage infrarouge croisé est très intense mais pratiquement ponctuelle car elle se forme sur un nombre extrêmement réduit de capteurs. En conséquence, l'éblouissement provoqué est beaucoup moins gênant que dans le cas de l'éclairage de route traditionnel.

L'invention concerne également un dispositif pour la mise en oeuvre du procédé précédent :

L'invention sera bien comprise à la lecture de la description suivante faite en référence au dessin annexé dans lequel :
La figure 1 est une vue schématique en élévation latérale d'un véhicule équipé selon l'invention;
la figure 2 est une vue schématique en plan des faisceaux d'éclairage de la figure 1;
la figure 3 est un schéma optique d'une partie d'un dispositif selon un exemple de réalisation de l'invention; et
la figure 4 est un schéma d'un exemple de réalisation d'un système optique du dispositif de la figure 3;

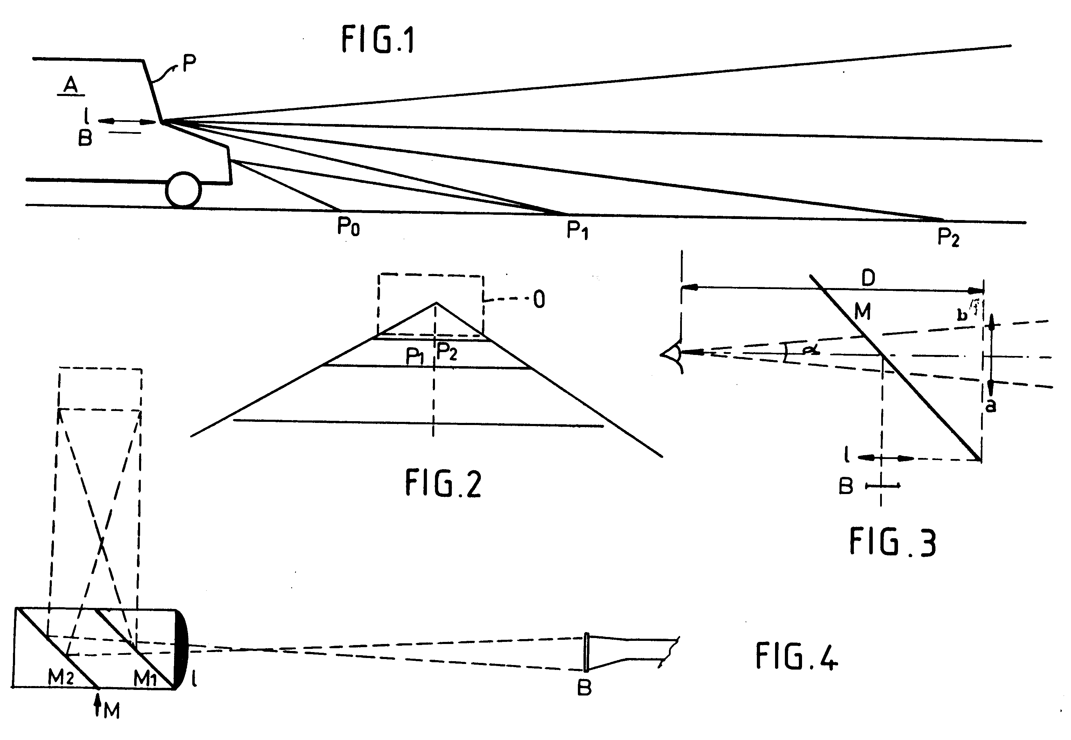

les figures 1 et 2 représentent schématiquement l'éclairage d'un véhicule automobile A. Le faisceau de croisement éclaire jusqu'à la ligne P₂, ce qui correspond à une distance d'environ 60m pour un rabattement de 2% et un projecteur disposé à 1,20 m du sol (projecteur auxiliaire). Le projecteur de croisement principal éclaire entre les lignes P₀ et P₁. Bien entendu, l'invention s'applique à un système d'éclairage équipé traditionnellement d'une seule paire de projecteurs de croisement correspondant au projecteur principal.

Un projecteur infrarouge disposé adjacent (dans l'exemple considéré) au projecteur de croisement éclaire, selon l'invention, la route à partir de la ligne P₂, soit avec une largeur angulaire de 8/60 ou environ 13 % et une épaisseur de 4%, ce qui assure l'éclairage d'un obstacle O d'une hauteur de 2,40 m à 60m.

L'image du champ ainsi éclairé en infrarouge est reçue, de manière connue en soi, par un réseau de capteurs photo-électriques (non représentés) transformant les rayons infrarouges réfléchis incidents en forces électromotrices. Ces forces électromotrices sont appliquées à un réseau parallèle de cellules photo-émettrices B de manière à créer par le réseau B une image visible éclairée du paysage.

Cette image est renvoyée, à travers un système de lentilles ℓ (figure 3), par un système réfléchissant M sur le pare-brise P du véhicule A selon une image a b.

Pour le conducteur, dont l'oeil est à une distance D d'environ 1m du pare-brise P, l'image a b mesure environ 10 cm si la zone éclairée en infrarouge fait 10 %. L'écartement des yeux étant d'environ 8 cm, la lentille doit mesurer au moins 10 + 8 = 18 cm, soit environ 20 cm. Verticalement, l'épaisseur de 4% indiquée au début sera suffisante et on pourra donc prendre 10 cm pour tenir compte des variations de hauteur de l'oeil. Une lentille de 10 x 20 cm a couramment 80 cm de distance focale. Le réseau B est donc placé sur le tableau de bord, à 80 cm (distance focale) à droite de la lentille ℓ et un système M réfléchissant à 45 ° assure le renvoi de l'image verticalement sur le pare-brise P. On notera que, par suite de la réflexion à 45° sur le système M, l'image du réseau B effectue une rotation de 90° et la coupure sur ce réseau B sera verticale alors que le faisceau de 4% visible en hauteur sera horizontal sur le réseau B.

L'éclairage de croisement comportant également des rayons infrarouges, il sera nécessaire pour interdire une superposition gênante d'images, d'effectuer une coupure inférieure de l'image infrarouge.

Pour réduire la distance de 20 cm nécessaire entre le tableau de bord et le pare-brise du fait de l'épaisseur du système optique décrit, on prévoit, selon une forme de réalisation de l'invention représentée schématiquement à la figure 4, que le système réfléchissant M est constitué d'un miroir semi-transparent M₁ et d'un miroir M₂ purement réfléchissant disposés parallèles et à 45° par rapport à la lentille ℓ. Le miroir M₁ réfléchit environ 45% du faisceau incident et transmet les 55% restant au miroir M₂, lequel réfléchit 90% du faisceau incident. Les deux faisceaux émergents ont ainsi la même luminance et se superposent puisque les images du réseau B sont à l'infini. La lentille ℓ devient alors une lentille circulaire de 10 cm de diamètre, avec une distance focale d'environ 60 cm, de sorte que l'encombrement de l'ensemble est réduit. Le miroir M₁ peut être fabriqué par des techniques connues de dépôts successifs de couches minces pour atteindre les caractéristiques voulues.

L'ensemble lentille ℓ - miroir M - pare-brise P peut être considéré comme un système optique unique. Les modifications de l'image introduites par la courbure du pare-brise peuvent être compensées par la forme du miroir M, non obligatoirement plan et par la lentille ℓ qui peut ne pas être sphérique.

Le système qui vient d'être décrit, avec des variantes possibles, permet une vision de nuit à longue distance mais peut être la source d'une gêne pour d'autres conducteurs bénéficiant du même équipement. En effet, la source infrarouge d'un autre véhicule produit sur le réseau B une tache pratiquement ponctuelle mais de très forte intensité qui peut provoquer un éblouissement.

Pour pallier cet inconvénient, l'invention prévoit de moduler la transmission de l'image provenant de l'éclairage infrarouge, selon un code ou fréquence propre au véhicule, et de comparer la modulation d'un rayonnement incident à ce code. Si les codes sont identiques, le rayonnement est transmis. Il est par contre arrêté si les fréquences sont différentes.

La modulation du faisceau infrarouge d'éclairage peut être effectuée par des moyens classiques, tels qu'un disque à échelons radiaux, alors que la comparaison des codes et l'autorisation de transmission sont effectuées à la sortie des capteurs. Le nombre de codes peut être suffisamment élevé pour réduire considérablement la probabilité de croisement de nuit de deux véhicules dont l'équipement possède le même code.

Il est en outre nécessaire en pratique de prévoir des moyens particuliers pour assurer la complémentarité de l'image projetée sur le pare-brise avec l'image résultant de l'éclairage par les projecteurs de croisement car l'inclinaison des projecteurs est variable électriquement ou mécaniquement par le conducteur, ou au moins au garage pour le réglage.

Selon une première forme de réalisation de ces moyens, le réseau de cellules photo-émettrices est monté sur un support mobile dont le déplacement est commandé en correspondance du déplacement des projecteurs, de préférence par les moyens de déplacement des projecteurs.

Selon une variante, les moyens optoélectroniques sont incorporés dans le projecteur et l'image visible formée est projetée sur un réseau de cellules photo-électriques fixé au véhicule, de dimension suffisante pour recevoir l'image précédente quelque soit l'orientation des projecteurs. Ces cellules alimentent électriquement le réseau B de cellules photo-émettrices qui projettent donc sur le pare-brise l'image du champ éclairé en infrarouge et sans superposition avec l'image vue du fait de l'éclairage de croisement.

Il est également possible de remplacer le réseau de cellules photo-électriques précédent par les extrémités d'un faisceau de fibres optiques, de caractéristiques suffisantes pour l'application prévue. L'autre extrémité des fibres est amenée en un faisceau fixé au foyer du système de projection sur le pare-brise.

## Revendications

1. Procédé de vision de nuit à longue distance pour véhicules automobiles, du type dans lequel on émet depuis le véhicule un faisceau d'éclairage en fréquence infrarouge invisible et on traite l'image ainsi obtenue de l'environnement par des moyens optoélectroniques restituant une image visible de l'image infrarouge,
caractérisé en ce que le faisceau de lumière visible de l'éclairage de croisement et le faisceau d'infrarouge sont géométriquement complémentaires, lesdits moyens optoélectroniques comprennent un réseau de capteurs transformant les rayons infrarouges réfléchis incidents en forces électromotrices, on applique lesdites forces électromotrices à un réseau parallèle de cellules photoémettrices qui produisent une image visible éclairée du paysage et on projette ladite image visible, par l'intermédiaire d'un système optique, sur le pare-brise du conducteur en supprimant la fraction de rayonnement infrarouge émis par l'éclairage de croisement et réfléchi sur lesdits capteurs.

2. Procédé selon la revendication 1,
caractérisé en ce qu'on effectue une coupure inférieure de l'image projetée afin d'éviter sa superposition avec le champ éclairé par les projecteurs de croisement.

3. Procédé selon l'une des revendications 1 et 2,
caractérisé en ce que dans le cas d'un pare-brise non-plan, on compense par ledit système optique la déformation de l'image formée sur le pare-brise.

4. Procédé selon l'une des revendications 1 à 3,
caractérisé en ce qu'on module le faisceau infrarouge émis à une fréquence codée, on compare cette fréquence codée à la fréquence des rayonnements reçus par lesdits capteurs et on supprime la transmission auxdites cellules pour des fréquences comparées différentes.

5. Dispositif pour la mise en oeuvre du procédé selon l'une des revendications 1 à 4, du type comprenant un moyen d'éclairage à grande distance en infrarouge invisible et des capteurs photo-électriques recevant le rayonnement infrarouge réfléchi,
caractérisé en ce qu'il comprend un réseau de cellules photoémettrices (B) monté en parallèle auxdits capteurs, et un système de projection (ℓ, M) de l'image dudit réseau (B) sur le pare-brise (P) du véhicule (A).

6. Dispositif selon la revendication 5,
caractérisé en ce que ledit système de projection comprend au moins une lentille (ℓ) dont le foyer est dans le plan dudit réseau (B) et un système réfléchissant (M).

7. Dispositif selon la revendication 6,
caractérisé en ce que ledit système réfléchissant comprend au moins deux miroirs (M₁, M₂) dont au moins un (M₁) est parallèlement transparent et partiellement réfléchissant.

8. Dispositif selon l'une des revendications 5 à 7,
caractérisé en ce qu'il comprend des moyens de coupure de l'image réfléchie en infrarouge.

9. Dispositif selon l'une des revendications 5 à 8,
caractérisé en ce qu'il comprend des moyens de modulation à une fréquence codée propre à un véhicule (A) de l'image réfléchie en infrarouge, des moyens de comparaison de la fréquence du rayonnement infrarouge reçu par lesdits capteurs à ladite fréquence codée et des moyens supprimant la liaison entre lesdits capteurs et lesdites cellules (B) dans le cas où les fréquences comparées sont différentes.

10. Dispositif selon l'une des revendications 5 à 9,
caractérisé en ce que ledit réseau de cellules photoémettrices (B) est monté sur un support mobile dont le déplacement est commandé en correspondance du déplacement des projecteurs, de préférence par les moyens de déplacement des projecteurs.

11. Dispositif selon l'une des revendications 5 à 9,
caractérisé en ce que lesdits capteurs sont incorporés dans le projecteur et l'image visible formée est projetée sur un réseau de cellules photo-électriques fixé au véhicule, de dimension suffisante pour recevoir l'image précédente quelque soit l'orientation des projecteurs, lesdites cellules alimentant électriquement le réseau (B) de cellules photo-émettrices.

12. Dispositif selon l'une des revendications 5 à 9,
caractérisé en ce qu'il comprend un faisceau de fibres optiques dont une extrémité est disposée au voisinage desdits capteurs et dont l'autre extrémité est disposée au foyer dudit système de projection (ℓ, M).
